# EUROPÄISCHE PATENTSCHRIFT

(11) **EP 2 527 408 B1**
(45) Veröffentlichungstag und Bekanntmachung des Hinweises auf die Patenterteilung: **01.07.2015**
(21) Anmeldenummer: 11167314.1
(22) Anmeldetag: 24.05.2011
(51) Int. Cl.: C09D 4/00

(54) **Verfahren zum Herstellen einer Folie mit mattierter Oberfläche**
Method for producing a film with a matt surface
Procédé de fabrication d'une feuille dotée d'une surface matifiée

(43) Veröffentlichungstag der Anmeldung: 28.11.2012
(73) Patentinhaber: Surteco Decor GmbH, 89150 Laichingen (DE)
(72) Erfinder: Dr. Haller, Heinz, 73207, Plochingen (DE)
(74) Vertreter: Behrmann, Niels

(56) Entgegenhaltungen:
- EP-A1- 0 706 834
- DE-A1- 19 545 124
- JP-A- 63 134 080

## Beschreibung

Die vorliegende Erfindung betrifft ein Verfahren zum Herstellen einer bahn- oder blattförmigen Folie, insbesondere Beschichtungsfolie für einen Trägerkörper, wobei die Folie eine mattierte Oberfläche aufweist. Ferner betrifft die vorliegende Erfindung verschiedene Beschichtungsfolien, welche durch ein solches Verfahren hergestellt sind.

Aus dem Stand der Technik sind Vorgehensweisen bekannt, mattierte Folien herzustellen. Zu diesem Zweck wird ein Substrat mit UV-härtbarem Lack versehen, welchem Mattierungsmittel zugesetzt sind. Eine darauf folgende, typischerweise breitbandige Bestrahlung und Härtung mit einer UV-Strahlungsquelle führt dann zu einer Folie mit mattierter Oberfläche, welche für Beschichtungs- oder Kaschierzwecke, etwa für Möbel, verwendet werden kann. Allerdings ist eine derartige Vorgehensweise in zweifacher Hinsicht nachteilig: Zum einen ist eine derartige, durch UV-Bestrahlung mattierte und vernetzte Beschichtung (bei durchaus guten Mattierungswerten) stark kratzempfindlich, eignet sich daher weniger für Anwendungsgebiete außerhalb des rein dekorativen Bereichs, wobei etwa derart beschichtete Möbelstücke bereits nach kurzer Zeit sichtbare Abnutzungsspuren zeigen. Der weitere Nachteil ist, dass einem derartigen, UVhärtbaren Lack für die Beschichtung üblicherweise keine Farbpigmente zugesetzt werden können, die die UV-Durchdringung verhindern, z. Bsp. TiO₂-Pigmente oder Ruß, da sonst der Lack nicht ausreichend aushärtet. Mithin wird daher diese als Stand der Technik vorausgesetzte Technologie im Zusammenhang mit bereits gefärbten bzw. pigmentierten Substraten verwendet, weiche dann mittels eines transparenten UV-Lacks überzogen werden.

Aus der EP 0 706 834 A1 ist ein Verfahren zum Herstellen einer bahnförmigen Folie mit mattierter Oberfläche bekannt, welches das Bereitstellen eines eine Kunststofffolie ausbildenden Substrats, das Beschichten des Substrats mit einem Acrylat aufweisenden Lack sowie das Bestrahlen des beschichtenden Substrats im unvernetzten Zustand des Lacks von der Beschichtungsseite mit monochromatischer UV-Strahlung zum. Erzeugen einer matten Oberfläche des Lacks offenbart. Erwähnt ist ferner, dass eine Elektrodenstrahlbestrahlung der mattierten Beschichtung möglich ist.

Aufgabe der vorliegenden Erfindung ist es daher, ein Verfahren zum Herstellen einer Folie mit mattierter Oberfläche zu schaffen, welche, bei guten Mattierungseigenschaften (und entsprechend niedrigen Glanzgraden etwa definiert in und gemessen nach DIN EN ISO 2813) verbesserte Kratzfestigkeitseigenschaften aufweist und zusätzlich für ein deckendes Einfärben, etwa mittels zugesetzter Farbpigmente, geeignet ist.

Die Aufgabe wird durch das Verfahren gemäß Ansprüche 1 bis 9 gelöst. Zusätzlicher Schutz im Rahmen der Erfindung wird beansprucht für Beschichtungs- sowie Trennfolien gemäß Ansprüche 10 bis 12, wie sie etwa als Möbel- und/oder Holz-Beschichtungsfolie, als Fahrzeugs-Beschichtungsfolie oder aber als Trennfolie für die Oberflächenherstellung eingesetzt werden können.

In erfindungsgemäß vorteilhafter Weise setzt die vorliegende Erfindung einen so genannten 100 %-Lack ein, nämlich einen lösungsmittelfreien und nicht wässrigen Lack, der mithin ausschließlich (später zu vernetzenden bzw. durchzuhärtenden) Feststoff enthält. Ein derartiger Lack, welcher typischerweise lediglich im Zusammenhang mit der Herstellung von hochglänzenden Oberflächen bekannt ist, hat sich im Rahmen der Erfindung auch als günstig für die Herstellung von matten (mattierten) Oberflächen erwiesen, wobei, im Rahmen der Erfindung gelöst durch eine zweistufige Bestrahlung, zunächst der auf ein Substrat aufgetra-gene Lack mittels monochromatischer UV-Strahlung so bestrahlt wird, dass sich, ohne ein Durchhärten oder Durchvernetzen der gesamten Lackschicht, lediglich auf der Oberfläche derselben und durch Effekte einer Mikrofaltung, eine Mattierung ergibt, woraufhin dann eine derart monochromatisch UV-bestrahlte Schicht (auf dem Substrat) einer Elektronenstrahlbestrahlung zur Durchvernetzung und Durchhärtung der gesamten Schicht unterzogen wird.

Durch diese Maßnahme entsteht zunächst ein Schrumpfungsprozess und damit die gewünschte Mattierung unmittelbar an der Oberfläche, wobei weiterbildungsgemäß dieser Effekt insbesondere auch bei 100 %-Lacken erfindungsgemäß festgestellt wurde, welchen keine gesonderten Mattierungsmittel (wie etwa Kieselsäure oder dergleichen) zugesetzt waren. Die nachfolgende Durchhärtung und Vernetzung der Gesamtschicht mittels Elektronenstrahlen fixiert dann erfindungsgemäß vorteilhaft diese Oberflächen-Mattierung, ohne sie im Hinblick auf ihre Mattierungseigenschaften nachteilig zu beeinflussen.

Erfindungsgemäß vorteilhaft sind dem Lack Farbpigmente (etwa Ruß, TiO2-Pulver oder dergleichen) zugesetzt, um dem Endprodukt Folie die gewünschte Farbe zu verleihen; erfindungsgemäß vorteilhaft sind diese Farbpigmente damit unmittelbar Teil der Beschichtung und wirken sich nicht nachteilig auf eine Vernetzung, Härte oder dergleichen Eigenschaften der Beschichtung aus.

Die auf diese erfindungsgemäße Weise hergestellte mattierte Folie zeichnet sich durch herausragende Mattierungseigenschaften aus, wobei Glanzgrade bis unter 3 (gemessen nach der zitierten DIN EN ISO 2813 und 60° Geometrie) bzw. unter 5 (entsprechend bei 85° Geometrie) erreichbar sind.

Damit eröffnet die Erfindung, welche zudem prozesstechnisch günstig kontinuierliche bzw. In-line-Herstellungsverfahren der Folie ermöglicht, zahlreiche neue Anwendungsgebiete für mattierte bzw. matte Folien, insbesondere für beanspruchte Oberflächen, ohne dass etwa eine Gefahr starker Abnutzung oder starken Verkratzens selbst nach kurzer Standzeit besteht.

In erfindungsgemäß vorteilhafter Weiterbildung der Erfindung hat es sich bewährt, den Lack der Beschichtung, welcher weiterbiidungsgemäß ein strahlenhärtbares Oligomer sowie ein strahlenhärtbares Monomer aufweist, mit monochromatischer UV-Strahlung einer Wellenlänge von 172 nm zu bestrahlen. Hier existieren bekannte Excimer-Strahler auf der Basis eines Xe-Emissionsspektrums, welche sich insbesondere auch günstig für eine Großserienfertigung eignen.

In erfindungsgemäß vorteilhafter Weise ist dem Lack ein die Kratzfestigkeit der durchgehärteten Beschichtung erhöhendes Oligomer zugesetzt, hier eignet sich beispielsweise das Produkt Ebecryl 5129 (eines Anteils <10 Gewichtsprozent des Lacks), wobei gerade eine solche Realisierungsform den diskutierten zusätzlichen Vorteil ermöglicht, dass dem Lack kein gesonderter Photoinitiator zugesetzt sein muss.

In erfindungsgemäß vorteilhafter Weiterbildung ist dem Lack ein Mattierungsmittel, etwa Kieselsäure oder dergleichen, zugesetzt.

In weiter erfindungsgemäßer Weise wird der Lack, bevorzugt durch einen Walzen- oder Flexodruckauftrag, mit einer Schichtdicke im Bereich zwischen 5 und 30 µm, bevorzugt im Bereich zwischen 10 und 20 µm, aufgetragen, wobei als Substrat sowohl Kunststoffmaterialien, wie etwa PP, Polyester oder dergleichen, als auch Folien aus Metall- oder Papiermaterial in Betracht kommen.

Weitere Vorteile, Merkmale und Einzelheiten der Erfindung ergeben sich aus der nachfolgenden Beschreibung eines Ausführungsbeispiels.

Ein Kunststoff-Foliensubstrat aus Polypropylen, Schichtdicke 150 µm, wird mittels Flexodruck mit einem Acrylatgemisch als Lack mit einer Beschichtungsdicke von 15 µm beschichtet, wobei das Acrylatgemisch folgende Zusammensetzung aufweist:

| | | |
|---|---|---|
| 100 T | NeoRad | U 6288 |
| 10 T | Ebecryl | 5129 |
| 40 T | TiO₂-Pigmente | |
| 10 T | Mattierungsmittel | |

wobei NeoRad U 6288 ein Gemisch aus Oligomer und Monomer ist.

Dem Acrylatgemisch ist ferner Ebecryl 5129 mit einem Anteil von 5 bis 10 Gewichtsprozent am Gesamtlack zugesetzt, und es sind Titandioxidpigmente einer durchschnittlichen Partikelgröße von 0,1 µm als weiße Pigmentierung beigemischt.

Ein derart beschichtetes Substrat wird unter Inertgas im Rahmen eines kontinuierlichen (In-line-)Prozesses unter einem 172 nm Excimer-Strahler vorbeigeführt, typischer Vorschub 60 m/min, bei 0,5 cm Abstand zur Lackoberfläche.

Es entsteht eine Oberflächenmattierung eines Glanzgrades <4 (60° Geometrie, gemessen wie vor) wobei unmittelbar darauf folgend eine Elektronenstrahlvernetzung (und damit Durchhärtung) des Lacks bei einem Eintrag von 30 kGy erfolgte. Die so fertig gestellte mattierte Folie wird dann zur weiteren Verwendung aufgerollt.

Dieses Folienprodukt eignet sich aufgrund seiner dauerhaften und kratzfesten Mattierung gut für praktisch sämtliche Beschichtungsaufgaben; neben Möbel- und Fußbodenanwendungen haben sich insbesondere Anwendungsgebiete in der Beschichtung von Metalloberflächen (z. B. Kfz-Karosserien) bewährt. Hinzu kommt die gute Eignung der erfindungsgemäß hergestellten Folie, selbst wiederum als Trennpapier für damit herzustellende bzw. auszuformende Oberflächen (wobei der matten Trennbeschichtung entsprechende und bekannte Trennadditive zugesetzt werden müssen) zu dienen, etwa bei der Herstellung von Kunstleder oder dergleichen.

## Patentansprüche

1. Verfahren zum Herstellen einer bahn- oder blattförmigen Folie mit mattierter Oberfläche
**gekennzeichnet durch** die Schritte
- Bereitstellen eines eine Kunststoff-, Metall-, oder Papierfolie ausbildenden Substrats,
- Beschichtung des Substrats mit einem ein Acrylat sowie Farbpigmente aufweisenden, lösungsmittelsfreien und wasserfreien sowie Elektronenstrahlhärtbaren Lack,
- Bestrahlen des beschichteten Substrats im unvernetzten Zustand des Lacks von der Beschichtungsseite mit monochromatischer UV-Strahlung zum Erzeugen einer matten Oberfläche des Lacks, ohne diesen durchzuhärten oder vollständig zu vernetzen,
- nachfolgendes Bestrahlen der **durch** die monochromatische UV-Strahlung mattierten Beschichtung mit Elektronenstrahlen zum Vernetzen und Durchhärten der Beschichtung,
wobei dem Lack ein eine Kratzfestigkeit der durchgehärteten Beschichtung erhöhendes Oligomer zugesetzt wird und dem Lack kein im Bereich der monochromatischen UV-Strahlung wirksamer Photoinitiator zugesetzt ist.

2. Verfahren nach Anspruch 1, **dadurch gekennzeichnet, dass** das Bestrahlen mit der monochromatischen UV-Strahlung bei einer Wellenlänge von 172 nm erfolgt.

3. Verfahren nach Anspruch 1 oder 2, **dadurch gekennzeichnet, dass** der Lack ein strahlenhärtbares Oligomer und/oder Monomer aufweist.

4. Verfahren nach einem der Ansprüche 1 bis 3, **dadurch gekennzeichnet, dass** dem Lack ein Mattierungsmittel in Form von Kieselsäure zugesetzt ist.

5. Verfahren nach einem der Ansprüche 1 bis 4, **dadurch gekennzeichnet, dass** die Bestrahlung mit der monochromatischen UV-Strahlung so eingerichtet ist, dass die Oberfläche des Lacks einen Glanzgrad <4, gemessen nach DIN EN ISO 2813 und 60° Geometrie, und/oder <8, gemessen nach DIN EN ISO 3218 und 85° Geometrie, erhält.

6. Verfahren nach einem der Ansprüche 1 bis 5, **dadurch gekennzeichnet, dass** der Lack auf das Substrat mit einer Schichtdicke im Bereich zwischen 5 und 30 µm für das Beschichten aufgetragen wird.

7. Verfahren nach einem der Ansprüche 1 bis 6, **dadurch gekennzeichnet, dass** das Beschichten durch eine Walze oder ein Flexodruckverfahren erfolgt.

8. Verfahren nach einem der Ansprüche 1 bis 7, **dadurch gekennzeichnet, dass** das Substrat auf der der Beschichtung entgegengesetzten Oberfläche mit einer für Möbel- und Fußbodenanwendungen sowie für die Beschichtung von Metalloberflächen kaschierfähigen Kleberschicht versehen wird.

9. Verfahren nach einem der Ansprüche 1 bis 8, **dadurch gekennzeichnet, dass** das Verfahren kontinuierlich ausgeführt wird, wobei das Bereitstellen des Substrats von einer kontinuierlichen Spendereinheit erfolgt und die Beschichtungsfolie mit durchgehärteter Beschichtung auf einer Rolle aufgewickelt wird.

10. Möbel- und/oder Holz-Beschichtungsfolie, hergestellt durch das Verfahren nach einem der Ansprüche 1 bis 9.

11. Fahrzeug-Beschichtungsfolie hergestellt durch das Verfahren nach einem der Ansprüche 1 bis 9.

12. Trennfolie für Oberflächenherstellungsprozesse hergestellt durch das Verfahren nach einem der Ansprüche 1 bis 9.

## Claims

1. A method for producing a film in web or sheet form with a matt surface
**characterised by** the steps
- provision of a substrate forming a plastic, metal, or paper film,
- coating of the substrate with a solvent-free, water-free and electron beam-curable varnish, having an acrylate and colour pigments,
- irradiation of the coated substrate in the non-crosslinked state of the varnish on the coating side with monochromatic UV-radiation for purposes of generating a matt surface on the varnish, without full curing or complete crosslinking of the latter,
- subsequent irradiation of the coating, matted by means of the monochromatic UV-radiation, with electron beams for purposes of crosslinking and full curing of the coating, wherein
an oligomer increasing the scratch resistance of the cured coating is added to the varnish, and no photoinitiator effective in the range of the monochromatic UV- radiation is added to the varnish.

2. The method in accordance with Claim 1,
**characterised in that**,
the irradiation with the monochromatic UV radiation takes place at a wavelength of 172 nm.

3. The method in accordance with Claim 1 or 2,
**characterised in that**,
the varnish has a radiation-curable oligomer and/or monomer.

4. The method in accordance with one of the Claims 1 to 3,
**characterised in that**,
a matting agent in the form of silica is added to the varnish.

5. The method in accordance with one of the Claims 1 to 4,
**characterised in that**,
the irradiation with the monochromatic UV-radiation is constituted such that the surface of the varnish receives a gloss level < 4, measured in accordance with DIN EN ISO 2813 and 60° geometry, and/or < 8, measured in accordance with DIN EN ISO 3218 and 85° geometry.

6. The method in accordance with one of the Claims 1 to 5,
**characterised in that**,
the varnish is applied onto the substrate with a coating thickness in the range between 5 and 30 µm for the coating.

7. The method in accordance with one of the Claims 1 to 6,
**characterised in that**,
the coating takes place by means of a roller or a flexographic printing method.

8. The method in accordance with one of the Claims 1 to 7,
**characterised in that**,
on the surface opposite to the coating the substrate is provided with an adhesive coating that can be laminated for furniture and flooring applications, and for the coating of metal surfaces.

9. The method in accordance with one of the Claims 1 to 8,
**characterised in that**,
the method is continuously executed, wherein the provision of the substrate takes place from a continuous dispenser unit, and the laminating film with cured coating is wound onto a roller.

10. A furniture and/or wood laminating film, produced by the method in accordance with one of the Claims 1 to 9.

11. A vehicle laminating film, produced by the method in accordance with one of the Claims 1 to 9.

12. A release film for surface production processes, produced by the method in accordance with one of the Claims 1 to 9.

## Revendications

1. Procédé pour la fabrication d'un film en forme de bande ou de feuille présentant une surface dépolie, **caractérisé par** les étapes
- mise à disposition d'un substrat représentant un film en matériau synthétique, en métal ou en papier
- revêtement du substrat par une laque présentant un acrylate ainsi que des pigments colorés, exempte de solvant et exempte d'eau ainsi que durcissable par un faisceau d'électrons,
- irradiation du substrat revêtu à l'état non réticulé de la laque du côté du revêtement par un rayonnement UV monochromatique pour générer une surface matte de la laque, sans la durcir ou la réticuler complètement,
- irradiation consécutive du revêtement, dépoli par le rayonnement UV monochromatique, par des faisceaux d'électrons pour la réticulation et le durcissement du revêtement,
la laque étant additionnée d'un oligomère augmentant la résistance aux rayures du revêtement durci et la laque n'étant pas additionnée d'un photo-initiateur actif dans le domaine du rayonnement UV monochromatique.

2. Procédé selon la revendication 1, **caractérisé en ce que** l'irradiation par le rayonnement UV monochromatique est réalisée à une longueur d'onde de 172 nm.

3. Procédé selon la revendication 1 ou 2, **caractérisé en ce que** la laque présente un oligomère et/ou un monomère durcissable par un rayonnement.

4. Procédé selon l'une quelconque des revendications 1 à 3, **caractérisé en ce que** la laque est additionnée d'un agent de matage sous forme d'un acide silicique.

5. Procédé selon l'une quelconque des revendications 1 à 4, **caractérisé en ce que** l'irradiation par le rayonnement UV monochromatique est conçue de manière telle que la laque obtient un degré de brillance < 4, mesuré selon la norme DIN EN ISO 2813 et à une géométrie de 60°, et/ou < 8, mesuré selon la norme DIN EN ISO 3218 et à une géométrie de 85°.

6. Procédé selon l'une quelconque des revendications 1 à 5, **caractérisé en ce que** la laque est appliquée sur le substrat à une épaisseur de couche dans la plage entre 5 et 30 µm pour le revêtement.

7. Procédé selon l'une quelconque des revendications 1 à 6, **caractérisé en ce que** le revêtement a lieu par un cylindre ou un procédé d'impression flexo.

8. Procédé selon l'une quelconque des revendications 1 à 7, **caractérisé en ce que** le substrat est pourvu, sur le côté opposé au revêtement, d'une couche d'adhésif contrecollable pour des applications de meubles et de sols ainsi que pour le revêtement de surfaces métalliques.

9. Procédé selon l'une quelconque des revendications 1 à 8, **caractérisé en ce que** le procédé est réalisé en continu, la mise à disposition du substrat étant réalisée par une unité de distribution continue et le film de revêtement présentant le revêtement durci étant enroulé sur un rouleau.

10. Film de revêtement de meubles et/ou de bois, fabriqué selon le procédé selon l'une quelconque des revendications 1 à 9.

11. Film de revêtement de véhicules, fabriqué selon le procédé selon l'une quelconque des revendications 1 à 9.

12. Film de séparation pour des procédés de réalisation de surfaces fabriqué selon le procédé selon l'une quelconque des revendications 1 à 9.
